Europäisches Patentamt

European Patent Office

Office européen des brevets

(11) Numéro de publication: **0 278 192 B1**

(12) **FASCICULE DE BREVET EUROPEEN**

(45) Date de publication de fascicule du brevet: **30.12.92** (51) Int. Cl.⁵: **H04N 7/08**

(21) Numéro de dépôt: **87402933.3**

(22) Date de dépôt: **21.12.87**

(54) **Procédé de diffusion numérique dans des canaux de télévision.**

(30) Priorité: **24.12.86 FR 8618163**

(43) Date de publication de la demande:
**17.08.88 Bulletin 88/33**

(45) Mention de la délivrance du brevet:
**30.12.92 Bulletin 92/53**

(84) Etats contractants désignés:
**DE GB IT NL SE**

(56) Documents cités:
**GB-A- 2 102 660**
**US-A- 3 700 793**

**N.E.C. RESEARCH & DEVELOPMENT, no. 71, octobre 1983, pages 20-26, Tokyo, JP; T. HIYAMA et al.: "4-level FM digital mobile radio equipment"**

**29TH IEEE VEHICULAR TECHNOLOGY CONFERENCE, Arlington Heights, Illinois, 27-30 mars 1979, pages 245-252, IEEE, New York, US; M.H. CALLENDAR et al.: "Network design for a fully automatic wide area radio-telephone service"**

**IEEE INTERNATIONAL CONFERENCE ON COMMUNICATIONS, Amsterdam, 14-17 mai**

**1984, vol. 3, pages 1199-1206, IEEE, Elsevier Science Publishers B.V. (North-Holland), Amsterdam, NL; D. MUILWIJK: "On Spectrum efficiency of radio transmission schemes for cellular mobile radio"**

(73) Titulaire: **FRANCE TELECOM**
**6, Place d'Alleray**
**F-75015 Paris(FR)**

Titulaire: **TELEDIFFUSION DE FRANCE SA**
**10 rue d'Oradour sur Glane**
**F-75732 Paris Cédex 15(FR)**

(72) Inventeur: **Pommier, Daniel**
**"Le Chant des Alouettes Breal Sous Mont-ford**
**F-35310 Mordelles(FR)**

(74) Mandataire: **Fort, Jacques et al**
**CABINET PLASSERAUD 84, rue d'Amsterdam**
**F-75009 Paris(FR)**

**EP 0 278 192 B1**

**Description**

L'invention concerne un procédé de diffusion numérique dans des canaux affectés à la télévision dans un plan de fréquences et elle trouve une application particulièrement importante dans la diffusion de programmes sonores vers des mobiles.

Les plans de fréquence de télévision découpent les bandes VHF et UHF en canaux destinés à être affectés chacun à un programme de télévision. Mais, dans une zone de service donnée, on ne peut pas utiliser tous les canaux, en raison de brouillages mutuels. Par exemple, on n'utilise pas actuellement, en diffusion hertzienne, deux canaux adjacents. Il est également exclu d'utiliser le même canal dans deux zones de service directement adjacentes car dans les zones proches de la frontière entre les zones il y aurait brouillage réciproque. Les réseaux de télévision offriront donc toujours des trous du spectre, dans lesquels il n'est pas possible de transmettre des signaux de télévision.

On connait déjà (GB-A-2 102 660) un procédé de diffusion audio avec sommation de plusieurs porteuses à des fréquences différentes, modulées en MDP8. Les porteuses audio sont le cas échéant ajoutées à des signaux de télévision à distribuer. Pour cela, il faut choisir les fréquences des porteuses audio dans des positions inoccupées dans les bandes de fréquence standard ou situées au-dessus. En d'autres termes, les porteuses audio ne sont pas diffusées dans des canaux occupés à l'intérieur des bandes de fréquence standard.

On connait également (US-A-3 700 793) un système de diffusion simultanée de deux signaux vidéo dans un même canal, lorsque l'énergie des deux signaux est répartie aux mêmes fréquences.

Dans ce cas, au moins en théorie, il est possible d'entrelacer les deux signaux par une simple inversion de phase provoquant un déplacement du spectre d'un des signaux d'une demi-fréquence de ligne. Rien ne suggère qu'il serait possible d'étendre cette conception à l'entrelacement de signaux de natures complétement différentes.

En résumé, ni l'un ni l'autre des documents cités n'envisage une diffusion sonore numérique dans un canal déjà occupé par un signal de télévision à faible énergie (par exemple destiné à une zone géographique adjacente), c'est-à-dire n'ayant pas de corrélation inhérente avec le signal sonore.

L'invention vise notamment à permettre d'utiliser, dans une zone donnée, un canal où la transmission de télévision est impossible, pour effectuer de la diffusion numérique. En d'autres termes, l'invention vise notamment à permettre d'utiliser, pour de la diffusion numérique, des fractions du spectre de fréquence inutilisables pour la télévision dans le cadre d'un plan général de répartition de fréquences.

Pour cela, il est intéressant de tirer parti de la structure du spectre d'un signal de télévision et de faire apparaitre la possibilité d'éviter des brouillages mutuels entre ce signal et un signal numérique. Tout d'abord, il a fallu constater qu'un canal de télévision sans embrouillage de l'image, présente un spectre de raies autour desquelles se concentre l'énergie, par suite de l'existence de plusieurs pseudo-périodes dans le signal de télévision. En particulier, ces raies sont liées à l'existence d'une période de ligne. A un degré moindre, les périodes de trame et d'image et des multiples de la période d'image contribuent à l'apparition de ces raies, dont la répartition dans le domaine fréquentiel dépendra notamment du procédé de transmission de la couleur (PAL, SECAM, ou NSTC). L'énergie contenue dans les zones du spectre entre les raies est relativement faible et, au bord de la zone de diffusion affectée à un programme de télévision, elle est peu susceptible de brouiller des signaux correspondant uniquement aux fréquences comprises entre les raies.

Par ailleurs, la largeur de bande d'un canal de télévision est supérieure à la cohérence en fréquence du canal de Rayleigh sélectif envisagé pour la diffusion numérique de programme sonore vers des mobiles ; cette propriété peut être exploitée, notamment par le procédé suivant le document FR -A-2 601 210. (publié le 08.01.1988).

On pourrait penser qu'il suffit, pour limiter la dégradation réciproque de la réception d'un programme de télévision dans une zone et de la réception numérique utilisant le même canal dans une zone adjacente, d'utiliser des techniques connues d'étalement du spectre numérique afin d'améliorer les conditions de partage. Mais le gain qu'apporte cet étalement par des techniques connues reste toujours insuffisant.

En conséquence l'invention propose un procédé de diffusion numérique dans un canal de télévision dont le signal présente un spectre de raies séparées par des intervalles à faible densité spectrale de puissance, conforme à la revendication 1. Une application importante est constituée par la diffusion numérique à l'intérieur d'une zone de service adjacente à une autre zone de service dans laquelle le même canal est occupé par un programme de télévision. Cette application n'est cependant pas exclusive. Par exemple, le procédé est utilisable pour la diffusion dans la même zone qu'un signal de télévision, dans deux canaux.

Le filtrage en peigne permet d'atténuer les fréquences dans lesquelles le signal de télévision présente

2

une énergie importante : on peut ainsi réduire le bruit à une valeur tolérable pour une réception satisfaisante.

Les débits numériques qu il est possible de diffuser, sans affecter le programme de télévision, permettent d'adopter un débit autorisant la radiodiffusion sonore numérique, avec un ou plusieurs programmes dans un seul canal. Le procédé de diffusion proprement dit peut notamment être du genre décrit dans les documents FR-A-2 601 210 et FR-A-2 604 316, publié le 25.03.1988. La mise en oeuvre de la présente invention implique simplement que les fréquences entre lesquelles s'effectue le multiplexage soient choisies pour qu'il y ait entrelacement spectral du signal numérique au niveau ligne (ou aux niveaux ligne et image) du spectre de télévision.

Quel que soit le type d'entrelacement choisi, on obtiendra, pour le signal de télévision, un gain important sur le rapport de protection ; on obtiendra, pour le signal numérique, une protection due à l'association du codage de canal et de l'effet du filtre en peigne à la démodulation.

Pour obtenir la condition d'entrelacement au niveau ligne il suffit, dans le cas d'une modulation du signal numérique dite OFDM (orthogonal frequency division multiplex) d'utiliser des symboles de durée égale à 2k fois la période T de ligne de télévision et d'utiliser, pour constituer l'alphabet des symboles de modulation, une fréquence seulement parmi 2k fréquences. Pour entrelacer le spectre de diffusion numérique avec le spectre de télévision, on donnera aux fréquences de chaque symbole des valeurs égales à des multiples impairs de la demi- fréquence de ligne 1/2T. Cette dernière condition revient à répéter 2k-1 fois des symboles ayant chacun une durée T (c'est-à-dire de les émettre 2k fois), avec inversion de la phase à chaque répétition, la continuité de phase étant assurée par la relation entre fréquences de l'OFDM et multiples impairs de 1/2T.

Avec par exemple une période ligne T = 64 $\mu$s, on aura une durée de symbole de 128, 256 ou 384 $\mu$s selon qu'on utilise k = 1, 2 ou 3. De façon générale, l'entrelacement au niveau ligne conduira simplement à allonger la durée des symboles.

Pour remplir la condition d'entrelacement au niveau image et toujours dans le cas d'une modulation OFDM, le signal numérique doit être structuré en trames de modulation de durée égale à celle d'une image de télévision. Il n'y aura plus cette fois répétition individuelle des symboles mais répétition à l'indentique de toute la trame 2$\ell$-1 fois ($\ell$ étant un entier), avec des fréquences symbole choisies égales à des multiples impairs de la demi-fréquence image, qui est de 12,5 Hz en Europe. Cette répétition de trame assure le décalage de précision recherchée.

On peut également réaliser encore un entrelacement supplémentaire au niveau de multiples de la période d'images, dans la mesure où le spectre présente des raies à ces fréquences. Mais, en général, la complication correspondante ne sera pas justifiée, et ce d'autant plus qu'il devient difficile de maintenir la précision requise entre la fréquence des symboles de modulation et la fréquence correspondante dans le spectre de télévision. Pratiquement, il faut déjà assurer une précision au hertz près pour donner son efficacité à l'entrelacement au niveau image. Cette précision doit être encore accrue lorsqu'on passe à un multiple de la période d'image.

L'invention sera maintenant décrite en détail en faisant référence aux dessins qui l'accompagnent et montrent des modes particuliers de réalisation. Il sera surtout fait référence au procédé mis en oeuvre, les moyens matériels étant avantageusement similaires à ceux décrits dans la demande FR-A-2 604 316.

Dans les dessins :
- les figures 1a et 1b montrent schématiquement l'entrelacement du spectre de télévision (dont la répartition en énergie est montrée sous forme d'une ligne en tirets) et du spectre de diffusion numérique (en trait plein) respectivement pour k = 1 et 3 ;
- les figures 2a et 2b montrent schématiquement la fonction d'autocorrélation $\Gamma$ du signal numérique pour k = 1 et 3 ;
- la figure 3 est un schéma montrant une disposition géographique possible de zones de diffusion numérique et de diffusion d'un programme de télévision ;
- la figure 4 montre une constitution possible de décodeur pour la réception du signal numérique.

Avant de donner des exemples de mise en oeuvre du procédé suivant l'invention, il est important de faire apparaître la nature du spectre de puissance d'un signal numérique à modulation OFDM dont les symboles ont une durée égale à 2k fois la durée T d'une ligne de télévision et la fonction d'autocorrélation d'un tel signal.

Si on désigne par $\gamma_L(\nu)$ le spectre de puissance du signal numérique entrelaçable au niveau ligne, on peut l'écrire, en fonction de la fréquence $\nu$ :

$$\gamma_L(v) = A^2 [\frac{\sin \pi v 2kT}{2kvT}]^2 \quad * \quad \sum_{n=-N/2}^{N/2} \delta(v-n/T)$$

Si maintenant on désigne par F($v$) la fonction fenêtre rectangulaire contenant l'ensemble des symboles de la modulation numérique, on peut écrire :

$$\gamma_L(v) = A^2 [\frac{\sin \pi v 2kT}{2kvT}]^2 \quad * \quad [\sum_{-\infty}^{+\infty} \delta(v-n/T).F(v)]$$

d'où on peut déduire la fonction d'autocorrélation

$$\Gamma_L(\tau) = g_{4kT}(\tau) \quad . \quad \sum_{n=-\infty}^{+\infty} [\sin \pi F(\tau-nT)/\pi F(\tau-nT)]$$

où $g_{4k\Upsilon}(\tau)$ est la fenêtre triangulaire de support $4k\Upsilon$.

Il faut remarquer au passage que pour $k = 0$ on retrouve la modulation OFDM classique, qui ne permet aucun entrelacement avec le spectre de télévision.

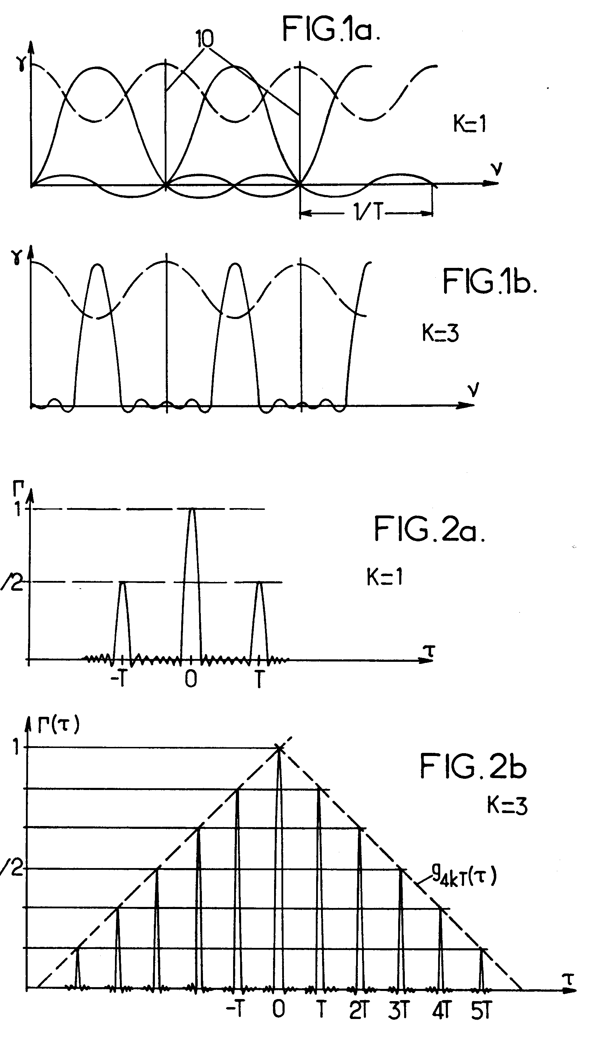

Les figures 1a et 2a montrent respectivement, en traits pleins, le spectre numérique $\gamma_L(v)$ et la fonction d'autocorrélation $\Gamma_L(\tau)$ pour $k = 1$.

On voit sur la figure 1a les raies 10 du spectre d'énergie du signal de télévision, espacées de $1/\Upsilon$ et les maxima d'énergie du signal numérique à mi-distance des raies 10. La fonction d'autocorrélation montrée en figure 2a fait apparaître un pic central pour $\tau = 0$ et deux pics latéraux pour $\tau = +\Upsilon$ et $-\Upsilon$, ayant chacun une hauteur moitié de celle du pic central.

Pour $\Upsilon = 64 \mu s$, durée de période ligne en Europe, cette solution conduit à des symboles de $128 \mu s$ et à une répartition sensiblement équilibrée de puissance entre le pic central et les pics latéraux.

La répartition peut être rendue plus favorable en augmentant la valeur de k. Pour $k = 3$ par exemple (correspondant à des symboles de $384 \mu s$) on obtient les fonctions montrées en figures 1b et 2b, qui font apparaître un accroissement de la puissance des pics latéraux au détriment du pic central.

Des considérations théoriques, similaires à celles données ci-dessus, permettent de faire apparaître la structuration à donner au signal numérique pour réaliser un décalage de précision d'image (qui sera généralement combiné à l'entrelacement du spectre à fréquence ligne). Comme on l'a déjà indiqué plus haut, le décalage de précision d'image implique de structurer le signal numérique en trames de modulation d'une durée égale à celle de l'image de télévision, avec répétition de la trame $2\ell-1$ fois avec des fréquences symbole égales à des multiples impairs de la demi-fréquence d'image.

Si on désigne par $T_0$ la durée de l'image de télévision le spectre de puissance $\gamma_I(v)$, centré à l'origine, s'écrit, dans le cas d'entrelacement et de décalage utilisés ensemble :

$$\gamma_I(v) = \gamma_L(v) \quad . [(\frac{\sin \pi v 2\ell T_0}{2\ell v T_0})^2 \quad * \quad \sum_{i=-\infty}^{+\infty} \delta(v-i/T_0)]$$

d'où on peut déduire :

$$\Gamma_I(\tau) = [\Gamma_L(\tau)] \quad * \quad [g_{4\ell T}(\tau) \quad . \quad \sum_{-\infty}^{+\infty} \delta(\tau-iT_0)]$$

où $g_{4\ell\Upsilon}$ est la fenêtre triangulaire de support $4\ell\Upsilon_0$.

On voit que $\Gamma_I(\tau)$ se présente sous forme d'un produit de deux facteurs et que la visibilité du signal numérique brouilleur dans le signal de télévision est encore réduite, puisque le second facteur du produit de convolution étend le support de la fonction d'autocorrélation non plus sur une seule image de télévision comme dans le cas des des figures 2a et 2b, mais sur $4\ell$ images. En contrepartie, la mise en oeuvre de l'entrelacement au niveau image implique de répéter $2\ell^{-1}$ fois le même message de 40 ms.

On donnera maintenant des exemples de réalisation limités au cas où on n'utilise que l'entrelacement au niveau ligne, plus simple à réaliser et qui n'exige par une grande précision des signaux émis ; ces exemples correspondent à un système de diffusion numérique dont les paramètres de base sont les suivants :

| | |
|---|---|
| Nombre de porteuses OFDM : | 256 |
| Nombre de porteuses utiles : | 224 |
| (cette limitation visant à faciliter la réalisation des filtres de réception) | |
| Séparation entre porteuses : | 15,625 kHz |
| Bande totale occupée : | 3,5 MHz |
| Modulation : | MDP 2 |
| Code convolutif, de rendement : | 1/2 |
| Longueur de contrainte du code : | 6 |
| Rapport entre l'énergie totale par bit et le bruit pour un taux d'erreur brut de $10^{-3}$ : | Eb/NO = 7dB |

Le tableau I ci-dessous donne, pour diverses valeurs de k, la valeur de ceux des paramètres du signal numérique qui dépendent de k, pour une période de ligne T = 64 $\mu$s et dans le cas où la marge temporelle réservée pour éviter les interférences intersymboles (voir la demande de certificat d'addition 86 13241) est également de 64 $\mu$s. Ce choix est déterminé par deux contraintes : les symboles doivent avoir une durée égale à 64 $\mu$s et les fenêtres d'observation dans le récepteur doivent porter sur des durées de 64 $\mu$s pour maintenir l'orthogonalité entre symboles.

## TABLEAU I

| : k | : 1 | : 2 | : 3 | : 4 : |
|---|---|---|---|---|
| : Durée d'un symbole : 2kT (µs) | : : 128 | : :256 | : :384 | : :512 : |
| : Durée utile d'un symbole : 2kT-T (µs) | : : 64 | : :192 | : :320 | : :448 : |
| : Perte log 2k/(2k-1) : (dB) | : : 3 | : : 1,25 | : : 0,8 | : : 0,6 : |
| : E'b/No* pour un taux : d'erreur de $10^{-3}$ (dB) | : : 10 | : : 8,25 | : : 7,8 | : : 7,6 : |
| : Débit utile : (kbits/s) | : : 875 | : :437,5 | : :291,66 | : :218,75: |

*E'b désigne l'énergie totale par bit, incluant (contrairement à Eb) la marge de 64 µs contre les interférences intersymboles.

On va maintenant déterminer les conditions dans lesquelles le procédé suivant l'invention peut être appliqué à une situation dans laquelle :
- un canal de données de télévision est effectivement utilisé dans une première zone de service,
- le même canal de télévision doit être utilisé pour un service de diffusion de données vers les mobiles dans une seconde zone, adjacente à la première.

On considèrera d'abord la situation qui existe à la limite entre les deux zones et les caractéristiques physiques à réaliser pour que, à cette limite, le partage entre signal de télévision et signal de diffusion de données soit possible.

Les conditions à remplir pour que le signal de télévision soit acceptable sont les suivantes :
- le rapport luminance L/bruit B dans une bande de 5,5 mHz où le service de télévision doit être encore protégé doit avoir une valeur minimum (L/B)$_{min}$ = 27 dB,
- le rapport entre la puissance crête du signal de télévision C$_{TV}$ et le bruit N dans la même bande de 5,5 mHz doit avoir une valeur minimum de 30 dB.

Le rapport de protection à réaliser entre la porteuse de télévision et la porteuse numérique, pour obtenir le rapport (L/B) ci-dessus de 27 dB, pour une dégradation de (L/B) pondéré inférieure à 1 dB, doit être de 23 dB au minimum. Ce chiffre tient compte de l'effet d'entrelacement du spectre et de la loi d'addition entre le bruit thermique gaussien et le signal numérique dont la distribution d'amplitude est gaussienne.

La protection par l'antenne de réception de télévision est généralement de l'ordre de 0 dB.

Le rapport de protection de 23 dB sera obtenu, comme on le verra plus loin, par la conjugaison de deux mesures, le décalage des porteuses numériques pour assurer un entrelacement en ligne, dont on peut espérer un gain de 13 dB, et le choix de la position la plus favorable de la bande de 3,5 MHz du signal brouilleur, constitué notamment par le signal numérique, dans le canal de télévision. Mais la valeur de 23 dB ne représente qu'une approximation et des mesures précises conduiront éventuellement à la modifier, d'autant plus qu'elle est susceptible de dépendre dans une certaine mesure de k.

Pour le signal numérique, les paramètres à prendre en considération sont essentiellement, en dehors de k,

- la marge m, en dB, que l'on peut accepter par rapport à la diffusion en espace libre (correspondant aux effets de masque entre l'espace et la valeur moyenne du champ reçu par un mobile en zone masquée) ; m peut être définie comme 10 Log Pe/Pm où Pe est la puissance en espace libre et Pm la puissance moyenne reçue, diminuée par les effets de masque ; cette marge doit être de 15 à 20 dB en zone urbaine, 5 dB en zone rurale,
- le débit numérique utile Du (mégabit par seconde).

La relation qui lie le débit numérique utile maximum ne perturbant pas la réception de la télévision en limite de zone à m et k est donnée par la formule :

$$Du = [(2k-1)/2k]5,5.10^{-m/10} \text{ (Du en MHz)}$$

Le tableau II ci-après donne les valeurs numériques de ce débit utile maximum Du en mégabit/seconde pour k = 1, 2, 3 et 4 et pour différentes valeurs de m :

## TABLEAU II

| m(dB) : k | 3 | 5 | 10 | 12 | 14 |
|---|---|---|---|---|---|
| 1 | 1,37 | 0,87 | 0,275 | 0,173 | 0,109 |
| 2 | 2 | 1,3 | 0,41 | 0,26 | 0,164 |
| 3 | 2,3 | 1,45 | 0,46 | 0,29 | 0,18 |
| 4 | 2,4 | 1,52 | 0,48 | 0,30 | 0,19 |

Une comparaison entre les tableaux I et II montre que, avec une valeur de k suffisante, il est toujours possible de réaliser la compatibilité entre les débits ne perturbant pas la réception de la télévision et les débits numériques transmis en modulation OFDM à entrelacement au niveau ligne. Le choix optimal pour une valeur donnée de m correspond en général à la valeur de k la plus élevée rencontrée et compatible en débit avec le tableau I : on voit ci-dessus que les valeurs hachurées ne sont pas acceptables.

L'analyse ci-dessus montre qu'il est possible d'admettre la diffusion numérique, dans une zone de service adjacente à une zone de diffusion de télévision protégée jusqu'à des rapports non pondérés (L/B) de 28 dB, un signal numérique dont le débit dépend de la marge m par rapport à l'espace libre en limite des deux zones de couverture.

Si le signal numérique correspond à une diffusion sonore, on ne peut guère aller au delà de k = 3 et m = 12 car le débit disponible au delà est inférieur aux 250 kbits/s que requiert un programme stéréophonique de haute qualité.

Du fait de l'affaiblissement progressif du signal numérique à l'intérieur de la zone de service où s'effectue la diffusion de télévision, la situation est évidemment plus favorable vis-à-vis du signal de télévision.

En résumé, on voit que le même canal est utilisable :
- pour la diffusion d'un signal de télévision dans une première région,
- dans une région adjacente pour la diffusion numérique,
- et ce, pour le signal numérique, avec des marges m par rapport à l'espace libre au delà de 5 à la limite entre les deux zones de service.
- pour des débits numériques utiles allant de 870 kbits à 190 kbits pour des marges allant de 5 à 14 dB.

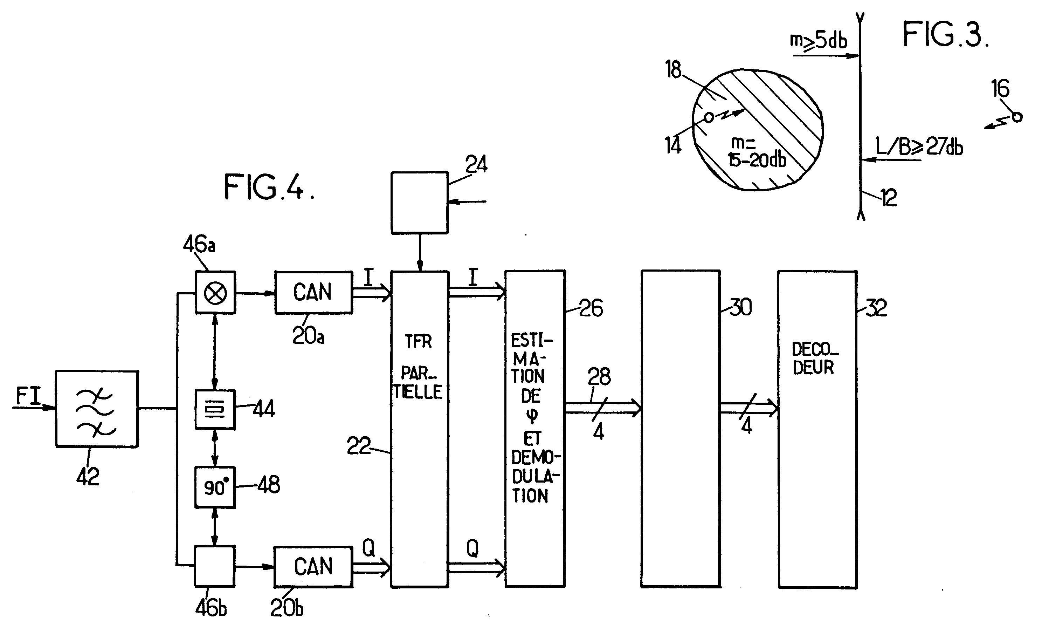

La figure 3 montre un exemple d'implantation qu'on peut considérer comme représentatif. Dans deux zones adjacentes, de part et d'autre d'une frontière 12, sont disposés un émetteur 14 de diffusion numérique vers des mobiles et un émetteur de télévision 16. Comme indiqué plus haut, le rapport L/B pour le signal de télévision doit être d'au moins 27 dB à la frontière. L'émetteur numérique est généralement implanté de façon à desservir une zone urbaine 18 et présente une puissance faible par rapport à celle d'un émetteur de télévision qui serait destiné à couvrir la même zone. La frontière 12 est généralement en zone rurale ou sub-urbaine. Le calcul montre qu'on peut, en règle générale, obtenir une marge par rapport à la diffusion en espace libre qui est de 15 à 20 dB pour la diffusion numérique vers des mobiles dans la zone urbaine 18 et que l'on peut obtenir une marge de 5 à 10 dB pour la diffusion numérique à proximité de la frontière 12, c'est-à-dire dans une région où la télévision peut commencer à être reçue. La pratique a montré qu'une telle marge de 5 à 10 dB est suffisante pour la réception dans des mobiles en zone rurale on sub-urbaine.

Les débits qui apparaissent sur le tableau II sont suffisants pour permettre la diffusion de deux programmes sonores de haute qualité en utilisant un canal qui, dans une zone adjacente, est effectivement mis en oeuvre pour la diffusion de programmes de télévision.

En conservant le même mode de modulation et d'entrelacement, on fait totalement disparaître le brouillage mutuel résiduel au cas où les canaux utilisés dans les zones adjacentes ne sont pas identiques mais simplement adjacents. Dans ce cas, on peut arriver à la capacité maximal du canal, le débit n'étant plus limité que par les dispositifs de modulation et de codage : on peut alors sans difficulté transmettre trois programmes radiophoniques de haute qualité.

En comparaison avec l'utilisation de la modulation OFDM classique, à spectre dense (correspondant à k = 0) qui permet la diffusion d'un débit numérique plus élevé, on constate qu'on obtient un gain de l'ordre de 20 dB sur la protection du même canal de télévision réutilisé dans une région voisine. Cet accroissement de protection est attribuable pour 13 dB environ à l'effet de décalage des zones de haute densité d'énergie dans le spectre et pour 7 dB à la réduction du débit numérique.

Le brouillage du signal numérique par le signal de télévision est également atténué, et dans certains cas permet d'accepter un certain recouvrement des zones de service.

On ne décrira pas de façon complète un dispositif de diffusion de données numériques utilisable pour mettre en oeuvre le procédé suivant l'invention car ce dispositif peut avoir, à l'émission, la constitution décrite dans le document FR-A-2 601 210 et, à la réception, la constitution décrite dans ce même document ou dans le document FR-A-2 604 316 (EP-A-0 296 175, publié le 28.12.88).

On a simplement représenté, en figure 4, un récepteur utilisable qui comporte, après des étages d'entrée classique fournissant un signal à fréquences intermédiaires, un décodeur. Ce décodeur comprend un filtre de canal 42 constitué par un filtre passe bande dont la largeur correspond à l'ensemble du spectre occupé par les porteuses de diffusion numérique.

Le signal fourni par le filtre 42 est projeté sur deux porteuses en quadrature à la fréquence centrale du canal fourni par un oscillateur 44 qui attaque directement l'une des entrées d'un multiplieur 46a et, par l'intermédiaire d'un déphaseur 48, l'entrée d'un multiplieur 46b. Les deux multiplieurs reçoivent le signal de sortie du filtre 42.

La sortie de chaque multiplieur attaque un convertisseur analogique numérique 20a ou 20b fournissant les échantillons d'entrée à un circuit 22 de calcul de transformée de Fourier rapide. Au circuit 22 est associé un circuit 24 de sélection de programme qui détermine les addresses, dans la mémoire stockant les résultats intermédiares compris dans le circuit 22 où se trouvent les échantillons sur lesquels le calcul doit être poursuivi et qui correspondent à l'une des voies sonores.

Enfin, les échantillons fournis par le circuit 22 sont appliqués à un circuit d'estimation de la phase 26 et de démodulation et des données de sortie quantifiées sont appliquées à un circuit de désentrelacement 30 puis à un décodeur 32.

## Revendications

1. Procédé de diffusion numérique dans un canal de télévision en présence d'un programme de télévision dont le signal présente dans ce canal un spectre de raies séparées par des intervalles à faible densité spectrale de puissance, caractérisé en ce que la diffusion numérique est effectuée par modulation numérique à l'émission avec multiplexage en fréquence suivant un spectre entrelacé avec celui du programme de télévision au niveau des multiples de la fréquence ligne ou au niveau des multiples des fréquences ligne et image et filtrage en peigne à la réception.

**2.** Procédé selon la revendication 1, caractérisé en ce que, la modulation du signal numérique étant de type OFDM, on utilise des symboles de même durée, égale à 2k fois la période T de ligne de télévision et on utilise pour constituer l'alphabet des symboles de modulation une fréquence par symbole choisie parmis 2k fréquences, les fréquences de multiplexage étant différentes pour différents symboles de modulation, k étant un entier compris entre 1 et 4.

**3.** Procédé selon la revendication 2, caractérisé en ce que la fréquence affectée à un symbole donné a une même valeur égale à un multiple impair de la demi-fréquence de ligne 1/2T.

**4.** Procédé selon la revendication 2 ou 3, caractérisé en ce qu'on structure le signal numérique en trames de modulation de durée égale à celle d'une image de télévision et on répète $2\ell-1$ fois ($\ell$ étant un entier) toute la trame avec des fréquences symbole choisies égales à des multiples impairs de la demi-fréquence image.

**5.** Procédé selon l'une quelconque des revendications précédentes, caractérisé en ce que la diffusion numérique dans le canal de télévision est affectée à la diffusion de deux à quatre voies son de haute qualité, le décodage à la réception comportant un filtrage en peigne par transformée de Fourier partielle.

**6.** Procédé selon l'une quelconque des revendications précedentes, caractérisé en ce qu'on utilise un code convolutif entre bits de signal numérique transmis à travers l'ensemble des porteuses utilisées dans le canal, la bande de cohérence du canal de Rayleigh sélectif étant très inférieure à la bande totale occupée par le signal numérique.

**7.** Procédé selon l'une quelconque des revendications précédentes, caractérisé en ce que, le programme de télévision occupant ledit canal dans une zone de service, la diffusion numérique se fait dans le même canal à l'intérieur d'une zone de service adjacente à ladite zone de service.

**Claims**

**1.** Process for digital broadcasting in a television channel in presence of a television program whose signal has, in said channel, a spectrum of spectral lines separated by low spectral power density intervals,
characterized in that digital broadcasting is carried out by digital modulation on transmission with frequency multiplexing according to a spectrum interlaced with that of the television program, at multiples of the line frequency or multiples of the line-frame frequency, and comb filtering on reception.

**2.** Process according to claim 1,
characterized in that, the modulation of the digital signal being of OFDM type, symbols having the same duration, equal to 2k times the modulation period T, are used and use is made, for constituting the alphabet of modulation symbols, a frequency per symbol which is selected among 2k frequencies, the multiplexing frequencies being different for different modulation symbols and k being an integer comprised between 1 and 4.

**3.** Process according to claim 2,
characterized in that the frequency assigned to a given symbol has a same value equal to an odd multiple of the half line frequency 1/2T.

**4.** Process according to claim 2 or 3,
characterized in that the digital signal is formatted into modulation frames having a duration equal to that of a television frame and the whole frame is repeated (2l-1) times (l being an integer) with symbol frequencies which are selecting equal to odd multiples of the half frame frequency.

**5.** Process according to any one of the preceding claims,
characterized in that the digital broadcasting in the television channel is dedicated to broadcasting of from to four high quality sound channels, decoding comprising a comb filtering with a partial Fourier transform upon reception.

6. Process according to any one of the preceding claims,
   characterized in that a convolution code between digital signal bits transmitted through the whole of the carriers used in the channel is used, the coherence band of the selective Rayleigh channel being much lower than the total spectral band occupied by the digital signal.

7. Process according to any one of the preceding claims,
   characterized in that, the television program, occupying said channel in a service zone, digital broadcasting is carried out in the same channel within a service zone which is adjacent to said service zone.

**Patentansprüche**

1. Verfahren zur digitalen Ausstrahlung in einem Fernsehkanal bei Anwesenheit eines Fernsehprogramms, dessen Signal in diesem Kanal ein Spektrum von Linien aufweist, welche durch Intervalle schwacher spektraler Leistungsdichte getrennt sind,
   **dadurch gekennzeichnet,** daß die digitale Ausstrahlung durch digitale Modulation bei Emission mit Multiplexing in der Frequenz gemäß einem Spektrum, welches mit demjenigen des Fernsehprogramms auf dem Niveau Vielfacher der Zeilenfrequenz oder auf dem Niveau Vielfacher der Zeilen- und Bildfrequenzen verschachtelt ist, und durch Kammfiltern bei Empfang, durchgeführt wird.

2. Verfahren nach Anspruch 1, dadurch gekennzeichnet, daß bei Modulation des digitalen Signals vom Typ OFDM Zeichen der gleichen Zeitdauer benutzt werden, welche 2k mal die Periode T der Zeile des Fernsehens ist, und daß man zur Bildung des Zeichenalphabets der Modulation eine Frequenz pro Zeichen, welche unter 2k Frequenzen ausgewählt ist, benutzt, wobei die Multiplexing-Frequenzen für verschiedene Modulationszeichen verschieden sind, sowie k eine ganze Zahl zwischen 1 und 4 ist.

3. Verfahren nach Anspruch 2, dadurch gekennzeichnet, daß die einem gegebenen Zeichen zugeordnete Frequenz einen gleichen Wert aufweist, welcher gleich einem ungeraden Vielfachen der Zeilenhalbfrequenz 1/2T ist.

4. Verfahren nach Anspruch 2 oder 3, dadurch gekennzeichnet, daß das digitale Signal in Modulationshalbbilder einer der Zeitdauer eines Fernsehbildes gleichenden Zeitdauer strukturiert ist, und daß das ganze Halbbild 2l - 1 mal (l ist eine ganze Zahl) mit den ungeraden Vielfachen der Bildhalbfrequenz gleich gewählten Zeichenfrequenzen wiederholt wird.

5. Verfahren nach einem der vorhergehenden Ansprüche, dadurch gekennzeichnet, daß die digitale Ausstrahlung im Fernsehkanal der Ausstrahlung von 2 bis 4 Tonkanälen hoher Qualität zugeordnet ist, wobei die Dekodierung bei Empfang ein Kammfiltern durch partielle Fourier-Transformation umfaßt.

6. Verfahren nach einem der vorhergehenden Ansprüche, dadurch gekennzeichnet, daß ein Faltungskode zwischen den Bits des digitalen Signals benutzt wird, die durch die Gesamtheit der in dem Kanal benutzten Trägerwellen übertragen werden, wobei das Kohärenzband des selektiven Rayleigh-Kanals sehr viel geringer als das durch das digitale Signal besetzte Gesamtband ist.

7. Verfahren nach einem der vorhergehenden Ansprüche, dadurch gekennzeichnet, daß die digitale Ausstrahlung in dem gleichen Kanal, den das Fernsehprogramm in einem Empfangsgebiet besetzt, innerhalb eines diesem Empfangsgebiet benachbarten Empfangsgebiets durchgeführt wird.

# FIG.1a.

K=1

# FIG.1b.

K=3

# FIG.2a.

K=1

# FIG.2b

K=3

$g_{4kT}(\tau)$

EP 0 278 192 B1

FIG.3.

m≥5db

18

14

m=15-20db

16

L/B≥27db

12

FIG.4.

24

46a

FI

42

44

48

90°

46b

20a  CAN  I

20b  CAN  Q

22  TFR PAR-TIELLE

I

Q

26  ESTI-MA-TION DE φ ET DEMO-DULA-TION

28

4

30

4

32  DECO-DEUR